(19) Europäisches Patentamt
European Patent Office
Office européen des brevets

(11) **EP 1 924 825 B1**

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(21) Anmeldenummer: **06763450.1**

(22) Anmeldetag: **01.06.2006**

(51) Int Cl.:
*G01F 1/66* (2006.01)      *G01F 5/00* (2006.01)

(86) Internationale Anmeldenummer:
**PCT/EP2006/062828**

(87) Internationale Veröffentlichungsnummer:
**WO 2007/020113 (22.02.2007 Gazette 2007/08)**

(54) **ULTRASCHALLMESSEINHEIT MIT INTEGRIERTER FEUCHTEERMITTLUNG**

ULTRASONIC MEASURING UNIT WITH INTEGRATED HUMIDITY ANALYSIS

UNITE DE MESURE A ULTRASONS PRESENTANT UNE FONCTION INTEGREE DE DETERMINATION DE L'HUMIDITE

(84) Benannte Vertragsstaaten:
**DE FR**

(30) Priorität: **16.08.2005 DE 102005038599**

(43) Veröffentlichungstag der Anmeldung:
**28.05.2008 Patentblatt 2008/22**

(73) Patentinhaber: **ROBERT BOSCH GMBH**
**70442 Stuttgart (DE)**

(72) Erfinder:
• **KONZELMANN, Uwe**
**71679 Asperg (DE)**
• **LANG, Tobias**
**70197 Stuttgart (DE)**

(56) Entgegenhaltungen:
**EP-A- 0 477 418      EP-A- 1 094 305**
**DE-A1- 19 713 526      US-A- 5 440 937**

EP 1 924 825 B1

**Beschreibung**

Die Erfindung bezieht sich auf eine Ultraschallmesseinheit mit integrierter Feuchteermittlung, insbesondere zur Luftmassenmessung an Verbrennungskraftmaschinen.

Stand der Technik

Aus DE 44 42078 A1 ist ein Verfahren zur Messung der Temperatur eines Fluids in einem Messrohr bekannt. Gemäß dieses Verfahrens wird ein erstes Ultraschallsignal in ein Messrohr in Richtung der Strömung des Fluids eingestrahlt und empfangen, wobei die Laufzeit $T_{ab}$ des ersten Ultraschallsignals gemessen wird. Ferner wird ein zweites Ultraschallsignal in das Messrohr entgegen der Richtung der Strömung des Fluids eingestrahlt und empfangen, bei dem die Laufzeit $T_{auf}$ des zweiten Ultraschallsignals gemessen wird. Aus beiden Laufzeiten $T_{ab}$ und $T_{auf}$ wird die Strömungsgeschwindigkeit v des Fluids im Messrohr ermittelt. Die Strömungsgeschwindigkeit v des Fluids wird aus der Schallge- schwindigkeit $C_0$ bestimmt, und aus der Schallgeschwindigkeit C erfolgt ein Rückschluss auf die Temperatur T des im Messrohr strömenden Fluids.

Aus DE 42 37 907 A1 ist ein Massendurchflussmesser bekannt. Ein Ultraschall-Durchflussmesser zur Messung des Massendurchflusses umfasst mindestens zwei Ultraschall-, wandler, die an einer Wand oder in den Wänden eines Strömungskanals angebracht sind. Zur Messung des Volumendurchflusses sind die beiden Ultraschallwandler mit einer Auswerteeinheit verbunden. Es ist ein thermischer Sensor an oder in den Wänden des Strömungskanals vorgesehen, der zur Temperaturmessung dient Für die Auswertung des Messergebnisses ist dieser mit derselben oder einer weiteren Auswerteeinheit verbunden, wobei diese Auswerteeinheit zumindest prinzipiell die Dichte der Materie in dem Strömungskanal bestimmt. Die Auswerteeinheiten sind so beschaffen, dass der thermische Sensor bei Ausfall der Ultraschallwandler hilfsweise eine zumindest näherungsweise Messung des Massendurchflusses erlaubt.

Der thermische Sensor kann als eine Gruppe von Hitzdrähten, als Heißfilm, als NTC-Widerstand, als PTC- Widerstand oder auch als mikromechanischer thermischer Sensor ausgebildet werden.

Von Nachteil gemäß der Lösung der DE 42 37 907 A1 ist der Umstand, dass bei Ausfall der Ultraschallwandler über den thermischen Sensor lediglich eine zumindest näherungsweise Messung des Massendurchflusses erfolgt, welche zur exakten Füllungsbestimmung der Brennräume einer Verbrennungskraftmaschine mit Verbrennungsluft zu ungenauen Ergebnissen führt. Um eine optimale Verbrennung zu ermöglichen, sind genaueste Informationen über die in den Brennräumen der Verbrennungskraftmaschine enthaltene Luftmenge erforderlich, um eine darauf abgestimmte Kraftstoffmenge idealerweise im stöchiometrischen Verhältnis zur im Brennraum vorhandenen Luftmenge einzuspritzen.

Des Weiteren sind aus dem Stand der Technik Ultraschallmesseinheiten bekannt, bei denen in einem Messrohr, in dem ein gasförmiges Medium strömt, zwei einander gegenüberliegend angebrachte Ultraschallwandler vorgesehen sind. Diese senden sich abwechselnd oder gleichzeitig Ultraschallsignale zu. Die sich einstellenden Laufzeiten der Ultraschallsignale $t_1$ und $t_2$ werden in Strömungsrichtung des gasförmigen Fluides und entgegen der Strömungsrichtung des gasförmigen Fluides gemessen, um die Durchflussrate des strömenden Mediums zu messen.

Ein Verfahren zur Bestimmung des Massendurchflusses eines in einem Strömungsrohr strömendes Medium, mittels einer Ultraschalleinrichtung, gemäß Oberbegriff des Anspruchs 1 und eine Ultraschallmesseinrichtung, gemäß Oberbegriff des Anspruchs 10 ist aus EP 1 094 305 A2 bekannt.

Darstellung der Erfindung

Die erfindungsgemäß vorgeschlagene Lösung, ein Verfahren, gemäß Anspruch 1 und eine Ultraschallmesseinrichtung, gemäß Anspruch 10, erlaubt eine genaueste Erfassung der im Ansaugtrakt strömenden Luftmenge von Kraftfahrzeug-Verbrennungsmotoren, so dass eine genaue Motorsteuerung, d.h. eine sehr genaue Zumessung von Kraftstoff zu den Brennräumen der mehrzylindrigen Verbrennungskraftmaschine erfolgen kann. Damit ist gewährleistet, dass die heute herrschenden Abgasnormen sowie die in Zukunft zu erwarten stehenden strengeren Abgasnormen eingehalten werden können.

Erfindungsgemäß wird ein Fühler vorgeschlagen, der einen Ultraschallströmungssensor umfasst, der in ein Strömungsrohr im Ansaugtrakt der Verbrennungskraftmaschine dichtend eingelassen ist. Der Fühler umfasst mindestens zwei in diesen integrierte Ultraschallwandler und einen Temperatursensor, eine Auswerteelektronik zur Auswertung der Ultraschallsignale sowie eine Reflexionsfläche. Der Temperatursensor kann entweder an der Reflexionsfläche oder an einer zugehörigen Halterung fixiert werden.

Mit dem Fühler wird der Massendurchfluss eines in einer Leitung strömenden Mediums, wie z. B. Luft, bestimmt, wobei mittels einer Ultraschalleinrichtung ein den Volumenstrom des Mediums repräsentierendes Volumenstromsignal und ein die Temperatur des strömenden Mediums repräsentierendes Ultraschall-Temperatursignal ermittelt wird. Mittels einer Druckerfassungseinrichtung wird ferner ein den Druck des strömenden Mediums repräsentierendes Drucksignal erzeugt und aus dem Volumenstromsignal, dem Ultraschall-Temperatursignal und dem Drucksignal der Massendurchfluss berechnet. Unabhängig davon wird mittels eines Temperaturfühlers, der z. B. als NTC-Element ausgebildet sein kann, ein die Medientemperatur des strömenden Mediums charakterisierender Temperaturwert ermittelt und dieser mittels des Temperaturfühlers ermittelte Wert zur Korrektur des errechneten Massendurchflusses und/oder zur Korrektur des Ultraschall-Temperatursignals verwendet.

Ferner kann der mittels des Temperaturfühlers bestimmte Temperaturwert des strömenden Mediums zur Ermittlung eines den Feuchtegehalt des strömenden Mediums repräsentierenden Wertes verwendet werden.

Durch das oben dargestellte Verfahren können in vorteilhafter Weise die Vorteile zweier unterschiedlicher Temperaturmessverfahren vereinigt werden. Diese Vorteile liegen darin, dass einerseits die Feuchteunabhängigkeit des ansonsten trägen Temperaturfühlers, der z.B. als ein NTC-Element ausgebildet ist, mit der Schnelligkeit und Berührungslosigkeit eines ansonsten von der Feuchte abhängigen Ultraschall-Temperatursignales kombiniert werden. Die Vereinigung der genannten Vorteile innerhalb eines einzigen Fühlers bzw. Sensors bzw. der diesem nachgeschalteten Auswertung führen zu einem im Vergleich zu Lösungen des Standes der Technik erheblich genaueren Massenstrom- und Temperatursignal sowie zu einem zusätzlichen, innerhalb des Motorsteuergerätes verarbeitbaren Feuchtesignal.

Der generelle Vorteil des Einsatzes der Ultraschallströmungsmessung ist vor allem darin zu erblicken, dass diese Technik bei Verschmutzungen nur eine geringe Drift aufweist, d.h. die Ultraschallsignale werden hinsichtlich ihrer Plausibilität und wahren Aussagekraft durch Verschmutzungen im Vergleich zu anderen Messtechniken nur wenig beeinflusst. Durch eine Ultraschalllaufzeitmessung kann außer der Strömungsrate des gasförmigen Mediums im Strömungsrohr auch dessen Schallgeschwindigkeit erfasst werden. Die Schallgeschwindigkeit des gasförmigen Mediums hängt im Wesentlichen von der Temperatur und der Luftfeuchte ab. Die Erfassung der Schallgeschwindigkeit erlaubt damit einen sehr schnellen Rückschluss auf die Temperatur und/oder die Luftfeuchte. Eine Ultraschalltemperaturmessung ist im Gegensatz zu einer Messung mit einem Temperaturfühler vollständig von der Temperatur der Rohrwand des Strömungsrohres entkoppelt

Zeichnung

Anhand der Zeichnung wird die Erfindung nachstehend eingehender beschrieben.

Es zeigt:

Figur 1    einen aus dem Stand der Technik bekannten Ultraschall-Durchflussmesser mit einander gegenüberliegend angeordneten Ultraschallwandlern,

Figur 2    einen Schnitt durch den erfindungsgemäß vorgeschlagenen Fühler mit Reflektorfläche und Ultraschallwandlern sowie integriertem Temperaturfühler in der Seitenansicht und

Figur 3    eine Ansicht des erfindungsgemäß vorgeschlagenen Fühlers mit Ultraschallwandlern und integriertem Temperaturfühler von der Vorderseite mit quergeschnittenem Strömungsrohr.

Ausführungsvarianten

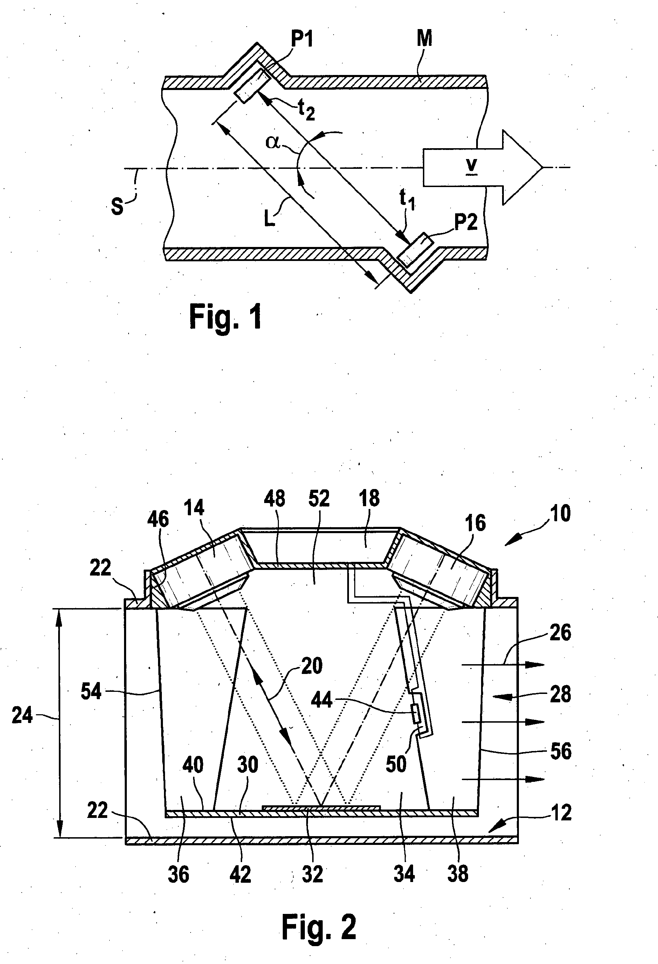

Der Darstellung gemäß Figur 1 ist eine aus dem Stand der Technik bekannte Ultraschall-Durchflussmesseinheit zu entnehmen. In einem Strömungsrohr M sind ein erster Ultraschallwandler P1 sowie ein zweiter Ultraschallwandler P2 einander gegenüberliegend aufgenommen. Dazu sind im Strömungsrohr M Aussparungen angebracht, in welche der erste Ultraschallwandler P1 und der zweite Ultraschallwandler P2 eingelassen sind. Gemäß der Darstellung in Figur 1 ist der Abstand zwischen dem ersten Ultraschallwandler P1 und dem zweiten Ultraschallwandler P2 durch L identifiziert. Sowohl der erste Ultraschallwandler P1 als auch der zweite Ultraschallwandler P2 sind um den Winkel $\alpha$ gekippt zur Symmetrieachse S des Strömungsrohrs M angeordnet. Das im Strömungsrohr M strömende Medium v strömt in Richtung des in Figur 1 eingezeichneten Pfeils. Der erste Ultraschallwandler P1 und der zweite Ultraschallwandler P2 senden und empfangen wechselseitig Ultraschallsignale. Aus den erhaltenen Laufzeiten der Ultraschallsignale in Strömungsrichtung (Laufzeit $t_1$) und entgegen der Strömungsrichtung des strömenden Mediums v (Laufzeit $t_2$) wird eine Laufzeitdifferenz bestimmt, über welche in einer in Figur 1 nicht dargestellten Auswerteelektronik auf die Strömungsrate des im Strömungsrohr M strömenden Mediums zurückgeschlossen werden kann.

Der Darstellung gemäß Figur 2 ist der erfindungsgemäß vorgeschlagene Fühler in einer teilweise geschnittenen Seitenansicht zu entnehmen.

Ein Ultraschallströmungssensor 10 ist in eine Aufnahmeöffnung 46 an der Oberseite eines Strömungsrohres 12 eingelassen. Der in Figur 2 dargestellte Ultraschallströmungssensor umfasst einen ersten Ultraschallwandler 14 sowie einen zweiten Ultraschallwandler 16. Zwischen dem ersten Ultraschallwandler 14 und dem zweiten Ultraschallwandler 16, die auf ein und derselben Seite des Strömungsrohres 12 angeordnet sind, befindet sich eine Auswerteelektronik 18. Entsprechend angesteuert emittiert beispielsweise der erste Ultraschallwandler 14 Ultraschallsignale 20 an eine Reflexionsfläche 30, 32, die vom zweiten Ultraschallwandler 16 aufgefangen werden. Selbstverständlich ist es auch möglich, den zweiten Ultraschallwandler 16 im Sendemodus und den ersten Ultraschallwandler 14 im Empfangsmodus zu betreiben. Die beiden Ultraschallwandler 14 beziehungsweise 16 sind integraler Bestandteil einer Fühlereinheit 48, welche in die Aufnahmeöffnung 46 in der Rohrwand 22 des Strömungsrohres 12 eingelassen ist. Die beiden Ultraschallwandler 14 beziehungsweise 16 sind um einen Kippwinkel geneigt zur Flächennormalen innerhalb der Fühlereinheit 48 angeordnet. Der erste Ultraschallwandler 14 und der zweite Ultraschallwandler 16 begrenzen eine Aussparung 52 im oberen Bereich der Fühlereinheit 48.

Die in Figur 2 dargestellte Fühlereinheit 48 umfasst neben der Auswerteelektronik 18, dem ersten Ultraschallwandler 14 und dem zweiten Ultraschallwandler 16 eine Halterung 28. Die Halterung 28 weist im Wesentlichen einen ersten Steg 36 und einen zweiten Steg 38 auf, die in Strömungsrichtung 26 des strömenden Mediums v, gesehen durch eine Ausnehmung 34 voneinander getrennt sind. An dem von dem ersten Ultraschallwandler 14 und dem zweiten Ultraschallwandler 16 abweisenden Ende ist an der Halterung 28 eine Reflexionsfläche 30 ausgebildet. Die Oberseite der Reflexionsfläche 30 ist durch Bezugzeichen 40 identifiziert, die Unterseite der Reflexionsfläche 30 ist mit Bezugszeichen 42 kenntlich gemacht.

Auf der Oberseite 40 der Reflexionsfläche 30 kann in vorteilhafter Weise eine das Reflexionsverhalten von Ultraschallsignalen 20 begünstigende Beschichtung 32 aufgeklebt oder auf sonstigem Wege aufgebracht sein. Die Beschichtung 32, die das Reflexionsverhalten von Ultraschallsignalen 20 positiv beeinflusst, kann auch in die Oberseite 40 der Reflexionsfläche 30 in Form eines Inserts oder eine Inlays eingebracht sein.

Im Bereich der Ausnehmung 34 befindet sich im zweiten Steg 38 der Halterung 28 ein Temperaturfühler 44. Der Temperaturfühler 44 ist in einer Ausnehmung 50 des zweiten Steges 38 aufgenommen und steht mit der Auswerteelektronik 18 der Fühlereinheit 48 in Verbindung. Bei dem Temperaturfühler 44 handelt es sich um ein NTC-Element.

Der Vollständigkeit halber sei erwähnt, dass die Anströmseite der Halterung 28 durch Bezugzeichen 54 gekennzeichnet ist, während die Abströmseite der Halterung 28 der Fühlereinheit 48 mit Bezugzeichen 56 bezeichnet ist

Der Darstellung gemäß Figur 2 ist weiterhin entnehmbar, dass der erste Ultraschallwandler 14, die Auswerteelektronik 18, der zweite Ultraschallwandler 16, die Halterung 28 samt Reflexionsfläche 30 als ein integrales Bauteil ausgebildet werden können, welches an der Oberseite des Strömungsrohres 12 in die dort vorgesehene Aufnahmeöffnung 46 eingesteckt werden kann. Weseitlich ist, dass das in den zweiten Steg 38 der Halterung 28 eingelassene Temperaturfühlerelement 44 von der Rohrwand 22 des Strömungsrohres 12 thermisch entkoppelt ist. Die Integration des Temperaturfühlers 44 in die Halterung 28 der Ultraschallmesseinrichtung 10 unterbindet einen Temperatureinfluss der Rohrwand 22 auf das Messergebnis des Temperaturfühlers 44. Die im Strömungsrohr 12 strömende Strömung eines strömenden Mediums, wie zum Beispiel Luft, durchtritt den gesamten Strömungsquerschnitt 24 des Strömungsrohres 12 und umströmt dabei die Oberseite 40 und die Unterseite 42 der Reflexionsfläche 30, die am unteren Ende der Halterung 28 angebracht ist und im Wesentlichen eben ausgebildet ist.

Neben der einstückigen Ausbildung der Fühlereinheit 48 kann diese auch mehrteilig ausgebildet sein, d.h. der obere Bereich der Fühlereinheit 48 mit erstem Ultraschallwandler 14, zweitem Ultraschallwandler 16 sowie Auswerteelektronik 18 kann an einer separaten Schnittstelle mit der Halterung 28, den ersten Steg 36, den zweiten Steg 38 sowie die Reflexionsfläche 30 umfassend, verbunden sein.

Mit der Fühlereinheit 48 ist die Erzeugung eines Ultraschall-Temperatursignals sowie die Ermittlung eines die Temperatur des strömenden Mediums repräsentierenden Wertes mittels eines Temperaturfühlers 44 möglich, der aufgrund seiner Positionierung von der Temperatur der Rohrwand 22 entkoppelt ist. Der langsamer arbeitende feuchteunabhängige Temperaturfühler 44 kann in vorteilhafter Weise zur Korrektur des schnellen und berührungslosen, aber feuchtigkeitsabhängigen Ultraschalltemperatursignals verwendet werden.

Durch eine Anbringung des Temperaturfühlers 44 innerhalb der Halterung 28 der Reflexionsfläche 30 wird eine beidseitige gute Umströmung des Temperaturfühlers 44 und damit eine wesentlich bessere thermische Ankopplung an das strömende Medium ermöglicht. Hingegen ist die thermische Ankopplung an die Rohrwand 22 des Strömungsrohres 12 wesentlich reduziert, verglichen mit einer Anbringung des Temperaturfühlers 44 in oder an der Rohrwand 22 des Strömungsrohres 12. Ferner wird durch die erfindungsgemäß vorgeschlagene Lösung keine separate zusätzliche Halterung für den Temperaturfühler 44 benötigt, die den Druckabfall an der Ultraschallmesseinrichtung 10 insgesamt negativ beeinflussen würde.

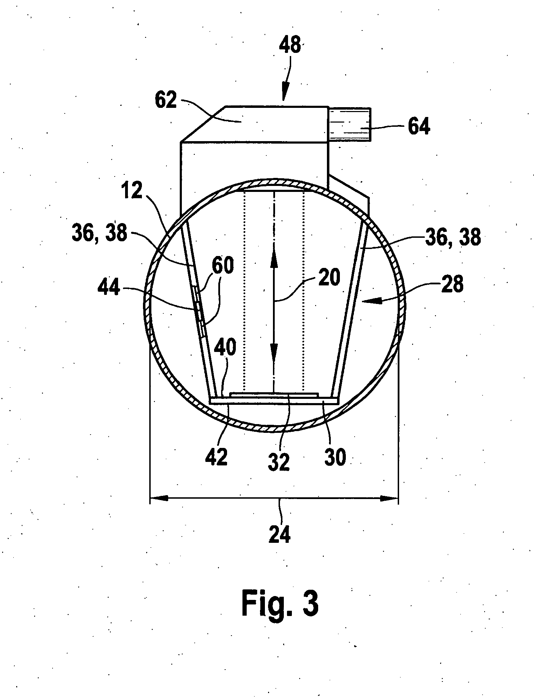

Der Darstellung gemäß Figur 3 ist eine um 90° gedrehte Ansicht des erfindungsgemäß vorgeschlagenen Fühlers mit Ultraschallwandlern zu entnehmen.

Aus der Darstellung gemäß Figur 3 geht hervor, dass die Halterung 28, an deren unteren Ende die Reflexionsfläche 30 aufgenommen ist, im Wesentlichen U-förmig ausgebildet ist. In einem der Bauteile der Halterung, d.h. dem ersten Steg 36 beziehungsweise dem zweiten Steg 38, ist der Temperaturfühler 44 integriert. Dieser wird beidseitig von der den Strömungsquerschnitt 24 des Strömungsrohres 12 passierenden Strömung des strömenden Mediums umströmt. Aufgrund der Anordnung des Temperaturfühlers 44 in der Halterung 28 ist der Temperaturfühler 44 von der Rohrwand 22 des Strömungsrohres 12 entkoppelt. Die elektrischen Verbindungen, über welche der Temperaturfühler 44 mit der Auswerteelektronik 18 in Verbindung steht, sind durch Bezugszeichen 60 identifiziert. In Figur 3 ist darüber hinaus dargestellt, dass auf der Oberseite 40 der Reflexionsfläche 30 eine die Reflexion von Ultraschallsignalen 20 begünstigende Beschichtung 32 aufgebracht ist.

An der Oberseite des Strömungsrohres 12 ist der obere Teil der Fühlereinheit 48 zu erkennen. Mittels einer Kappe 62 sind der erste Ultraschallwandler 14 und der zweite Ultraschallwandler 16 sowie die Auswerteelektronik 18 gegen Verschmutzung und Feuchtigkeitseinflüsse geschützt. Seitlich an der Kappe 62 befindet sich ein Anschlussstecker 64, über den die Fühlereinheit 48 von außen mit einer Betriebsspannung versorgt werden kann und über welchen die Messsignale nach außen, so zum Beispiel an ein zentrales Motorsteuergerät der Verbrennungskraftmaschine übermittelt werden können. Im zentralen Motorsteuergerät der Verbrennungskraftmaschine wird anhand der übertragenen Signale der Ultraschallmesseinrichtung 10 die auf den Füllungsgrad der einzelnen Zylinder der mehrzylindrigen Verbrennungskraftmaschine abgestimmte Kraftstoffmenge berechnet, die entsprechend des vorgesehenen Zündzeitpunktes (abhängig von der Zündfolge) in den Brennraum eingespritzt wird.

Nachfolgend wird mit c die Schallgeschwindigkeit bezeichnet. Die Schallgeschwindigkeit c hängt von der Zusammensetzung eines Gases, im Falle von Luft insbesondere von der Luftfeuchte und der Temperatur ab, gemäß der nachfolgenden Beziehung:

$$c = \sqrt{\kappa R T}$$

mit der Gaskonstanten R, dem Adiabatenexponenten $\kappa$ und der Temperatur T. Der Adiabatenexponent $\kappa$ hängt von den molekularen Freiheitsgraden des strömenden Mediums ab. Die Länge des Ultraschallweges wird mit L bezeichnet, der Verkippungswinkel des Ultraschallsignalweges gegenüber der Strömungsrichtung mit a. Die Schalllaufzeiten entgegen und mit der Strömungsrichtung des strömenden Mediums werden durch $t_1$, $t_2$ bezeichnet, der Druck mit p und die Temperatur des Temperaturfühlers 44 mit $T_{NTC}$. Abgeleitete Hilfsgrößen sind beispielsweise eine Differenzlaufzeit $\Delta t = t_1 - t2$, die Summenlaufzeit $\Sigma t = t_1 + t_2$ sowie ein Korrekturfaktor $s = 1 - (\Delta t / \Sigma t)^2$ (unter der Voraussetzung von Strömungsraten von ungefähr 1).

Aus den oben genannten Größen kann direkt die Schallgeschwindigkeit c als

$$c = 2 \bullet L \bullet \frac{1}{\Sigma t} \bullet \frac{1}{s}$$

und die mittlere Strömungsgeschwindigkeit $v$ als

$$v = \frac{2L}{\cos \alpha} \bullet \frac{\Delta t}{(\Sigma t)^2} \bullet \frac{1}{s}$$

bestimmt werden.

Das Massenstromsignal m kann näherungsweise proportional zur Teilchenstromrate $\dot{n}$ und des strömenden Mediums angesehen werden.
Mit

$$p \bullet V = nkT$$

und

$$v \sim dV / dt \; (\text{Volumenstrom})$$

ergibt sich die Teilchenstromrate $\dot{n}$ zu:

$$\dot{n} = \frac{dn}{dV} \bullet \frac{dV}{dt} \sim \frac{p}{T} \bullet v \sim p \frac{v}{c^2} \kappa \sim p \bullet \Delta t \bullet s \bullet \kappa$$

In einer weiteren Näherung kann $\dot{n}$ als proportional $p \bullet \Delta t$ angesetzt werden, wobei ein Fehler gemäß des Faktors $s \bullet \kappa$ in Kauf genommen wird. Falls sich die Gaszusammensetzung des strömenden Mediums nur durch Luftfeuchtigkeit wesentlich verändert, ist dieser Fehlerfaktor eine Funktion der mittleren Strömungsgeschwindigkeit $v$, der Temperatur $T$ und der Luftfeuchtigkeit $h_{rel}$. Die Berechnung eines bezüglich der Luftfeuchte unkorrigierten Massenstrom- und Ultraschall-Temperatursignals kann durch die Beziehung

$$m_{UFM} \sim p \bullet \Delta t$$

dargestellt werden. Eine Berechnungsmöglichkeit bei größeren Strömungsraten, die bezüglich der Luftfeuchte jedoch immer noch unkorrigiert ist, schließt den Korrekturfaktor $s$ mit ein gemäß der nachfolgenden Beziehung:

$$m_{UFM} \sim p \bullet \Delta t \bullet s$$

Das bezüglich der Luftfeuchte unkorrigierte Ultraschall-Temperatursignal wird gemäß der Beziehung

$$T_{UFM} \sim c^2$$

berechnet.
Für eine feuchtekorrigierte Berechnung ist das unkorrigierte Massenstromsignal mit dem Faktor $\kappa_{feucht} / \kappa_{trocken}$ zu korrigierten:

$$m_{korr} = m_{UFM} \bullet korr = \dot{m}_{UFM} \bullet \kappa_{feucht} / \kappa_{trocken} = m_{UFM} \bullet T_{UFM} / T_{NTC}$$

Es ist zu beachten, dass der Temperaturfühler 44 thermisch nicht nur an das strömende Medium, wie z. B. Luft, sondern auch an die Rohrwand 22 des Strömungsrohrs 12 angebunden ist. Bei Temperaturunterschieden zwischen der Rohrwand 22 des Strömungsrohres 12 und des strömenden Mediums wird das Temperatursignal des Temperaturfühlers 44 umso verlässlicher, je höher die Strömungsrate des strömenden Mediums ist. Andererseits ändert sich die absolute Luftfeuchtigkeit im Allgemeinen nicht sehr schnell, so dass der Korrekturfaktor nicht ständig neu bestimmt werden muss, sondern nur für den Fall, dass das Temperatursignal $T_{NTC}$ des Temperaturfühlers 44 als verlässlich genug eingeschätzt wird. Es ist zu beachten, dass der potenzielle Luftfeuchteeinfluss mit abnehmender Temperatur sinkt, da die Luft aufgrund des abnehmenden Dampfdrucks weniger Wasser aufnehmen kann. Aufgrund der Messtoleranzen des Temperaturfühlers 44 und der obenstehend beschriebenen zusätzlichen Messfehler würde bei zu geringen Temperaturen eine Feuchtekorrektur die Genauigkeit des Luftmassensignals nicht verbessern.
Um diese Grenzen bezüglich einer sinnvollen Korrektur zu berücksichtigen, kann beispielsweise eine Aktualisierung der Korrektur

$$korr = T_{UFM} / T_{NTC}$$

immer dann durchgeführt werden, sobald die Strömungsrate bzw. das Massenstromsignal eine vorher festgelegte Schwelle, wie z. B. m = 100 kg/h überschreitet. Unterhalb einer von den jeweiligen Einzeltoleranzen und den möglichen Umgebungsbedingungen abhängenden, vorher festzulegenden Grenztemperatur (z. B. T = 20°C) kann z. B. der Korrekturfaktor

$$korr = 1$$

gesetzt werden,

Das mittels der Ultraschallwandler 14 und 16 ermittelte Ultraschalltemperatur-Signal hat den signifikanten Vorteil, sehr schnell zu sein und nur das strömende Medium, wie z. B. Luft, zu erfassen. Nachteilig ist hingegen die Luftfeuchteabhängigkeit des unkorrigierten Ultraschalltemperatursignals. Der Temperaturfühler 44 verhält sich demgegenüber entgegengesetzt: Dessen Temperatursignal ist träge und es kann bei geringen Strömungsraten aufgrund der thermischen Ankopplung des Temperaturfühlers 44 an die Rohrwand 22 des Strömungsrohres 12 fehlerbehaftet sein. Andererseits sind Feuchteeinflüsse vernachlässigbar.

Insbesondere bei nicht zu hohen Temperaturen ist der potenzielle Feuchteeinfluss auf das Temperatursignal des Temperaturfühlers 44 zu gering, so dass dessen Temperatursignal nicht korrigiert werden muss. Bei höheren Temperaturen steigt die Wasseraufnahmefähigkeit der Luft und damit der potenzielle auf die Luftfeuchte zurückzuführende Fehler. In diesem Fall kann zumindest bei ausreichender Strömungsrate des strömenden Mediums das Temperatursignal $T_{NTC}$ des Temperaturfühlers 44 als verlässlich angesehen werden.

Das feuchtekorrigierte Temperatursignal ergibt sich dann zu

$$T_{korr} = T_{UFM} / korr_T \,,$$

wobei der Korrekturfaktor $korr_T$ wie oben beschrieben bei Überschreiten einer festgelegten Schwelle des Massenstroms von $\dot{m}$ = 100 kg/h oder hinsichtlich der Grenztemperatur jeweils aktualisiert wird. Dadurch sind die positiven Eigenschaften beider Messprinzipien, d.h. eines im Wege des Ultraschallverfahrens erfassten Temperatursignals und eines durch den Temperaturfühler 44 erfassten Temperatursignals in einem einzigen Signal vereint.

Hinsichtlich der Bestimmung der Luftfeuchte unterscheiden sich die Adiabatenexponenten feuchter und trockener Luft gemäß

$$\kappa_{feucht} / \kappa_{trocken} = korr \,,$$

wobei korr abhängig von der Strömungsrate hinsichtlich des Überschreitens einer vorher festgelegten Massenstromschwelle von z. B. $\dot{m}$ = 100 kg/h oder hinsichtlich einer vorher festzulegenden Grenztemperatur (z. B. T = 20°) gleich 1 gesetzt wird.

Unter der Voraussetzung, dass sich die Gaszusammensetzung im Wesentlichen nur bezüglich des Wasseranteils (Luftfeuchte) ändert und alle sonstigen Bestandteile immer im gleichen Anteilsverhältnis zueinander stehen, kann aus dem Verhältnis des tatsächlichen Adiabatenexponenten zu demjenigen trockener Luft der Wasseranteil bestimmt werden. Der Adiabatenexponent für eine Gasmischung lässt sich herleiten als

$$\kappa = \gamma / M$$

mit

$$\gamma = 1 + R(X_1C_{v1} + X_2C_{v2} + \ldots)^{-1} \text{ und } M = X_1M_1 + X_2M_2 + \ldots$$

mit $\sum_j X_j = 1$, wobei $C_v$ die spezifische Wärme bei konstantem Volumen und M die molare Masse ist.

Diese sind bekannte Größen und der Literatur entnehmbar. $X_j$ sind die jeweiligen molaren Anteile der einzelnen Mischungskomponenten. Diese Anteile sind für trockene Luft ebenfalls aus der Literatur bekannt. Damit kann aus dem Adiabatenexponenten für feuchte Luft direkt der Anteil $X_j$ bestimmt werden, der den Wasseranteil, d. h. die Luftfeuchtigkeit des strömenden Mediums im Falle von Luft beschreibt.

In Verbrennungskraftmaschinen ist zur Steuerung einer optimalen Verbrennung in erster Linie der Sauerstoffanteil der Verbrennungsluft interessant. Zusätzlich zur oben dargelegten Feuchtekorrektur bezüglich des Gesamtmassenstroms des strömenden Mediums kann aus der zuvor hergeleiteten Bestimmung der Luftfeuchte ein weiterer Korrekturfaktor bestimmt werden, der die Zurückdrängung des Sauerstoffanteiles durch das Wasser, d h. den Wasseranteil des strömenden Mediums berücksichtigt.

Die molaren Anteile $X_j$ für trockene Luft werden als bekannt vorausgesetzt, insbesondere der Sauerstoffanteil $X_{O_2}^{trocken}$. Weiterhin kann vorausgesetzt werden, dass die Verhältnisse dieser Anteile zueinander auch bei feuchter Luft konstant bleiben. Durch eine Luftfeuchtebestimmung wie oben dargelegt ist der Wasseranteil $X_{H_2O}$ bekannt, aus dem der geänderte Sauerstoffanteil $X_{O_2}^{feucht}$ bestimmbar ist. Das auf den Sauerstoffanteil bezogene Massenstromsignal ergibt sich dann als

$$m_{O_2} \sim m_{korr} \bullet X_{O_2}^{feucht} / X_{O_2}^{trocken}.$$

Bevorzugt ist der Temperaturfühler 44 an einer Anströmkante, im Falle gemäß Figur 2 an der durch die Ausnehmung 34 der Halterung 28 definierte Anströmkante des zweiten Steges 38 angeordnet. Dadurch ist sichergestellt, dass der Temperaturfühler 44 beidseitig von der zu erfassenden Strömung umströmt ist, so dass eine optimale thermische Ankopplung an das strömende Medium, wie zum Beispiel Luft, gewährleistet ist, wohingegen die thermische Ankopplung an die Rohrwand 22 des Strömungsrohres 12 minimiert ist. Die so gewählte Position des Temperaturfühlers 44 gewährleistet eine wesentlich genauere Temperaturmessung des strömenden Mediums, verglichen mit einer Anbringung des Temperaturfühlers 44 an der Wand 22 des Strömungsrohres 12.

Als Variante ist es denkbar, zusätzlich auch einen Drucksensor im Bereich der Fühlereinheit 48 zu verwenden oder in die Fühleinheit 48 zu integrieren. Ein über den Drucksensor erfasster Druckmesswert oder eine mit den anderen Messwerten des Sensors kombinierte Messgröße kann über die Fühlereinheit 48 zur weiteren Auswertung an das zentrale Motorsteuergerät übermittelt werden. Innerhalb der Auswerteelektronik 18, die im oberen Bereich der Fühlereinheit 48, durch die Kappe 62 geschützt, aufgenommen ist, kann prinzipiell auch die Dichte des im Strömungsrohr 12 strömenden Mediums bestimmt werden.

Die Reflexionsfläche 30, die an der Unterseite der Halterung 28 angeordnet ist, kann in Abwandlungen der Darstellung gemäß Figur 2 Krümmungen oder Wölbungen oder sonstige Unebenheiten aufweisen, um die zu reflektierenden Ultraschallsignale 20 zu bündeln, zu lenken, zu fokussieren oder in anderer Weise die Wellenfronten der Ultraschallsignale 20 zu verändern. Insbesondere kann die Halterung 28 und/oder die Reflexionsfläche 30 so geformt sein, das Ultraschallsignale 20, die nicht auf dem eigentlichen Messweg verlaufen, aufgrund der Formung der Halterung 28 beziehungsweise der Reflexionsfläche 30 absorbiert oder gestreut werden, um störende Signalechos oder parasitäre Signalwege zu vermeiden. Hierzu lassen sich außerhalb des eigentlichen Reflexionsbereiches auch Materialien einsetzen, die zum Beispiel aufgrund ihrer Oberflächenbeschaffenheit oder Porosität die verwendeten Ultraschallfrequenzen schlechter reflektieren. Die Reflexionsfläche 30 kann zusammen mit der Halterung 28 zum Beispiel in Wannenform ausgebildet werden, wobei sowohl die Halterung 28 als auch die Reflexionsfläche 30 Öffnungen vom Innen- zum Außenbereich der Wanne hin aufweisen kann.

Gemäß den Darstellungen in den Figuren 2 und 3 ist der Temperaturfühler 44 in die Halterung 28, insbesondere in eine Aussparung 50 am zweiten Steg 38 integriert. Alternativ ist es ebenso möglich, den Temperaturfühler 44 in die Reflexionsfläche 30 zu integrieren, so dass dieser sowohl an der Oberseite 40 der Reflexionsfläche 30 sowie auch an deren Unterseite 42 von dem im Strömungsrohr 12 strömenden Medium umströmt wird.

**Patentansprüche**

1. Verfahren zur Bestimmung des Massendurchflusses eines in einem Strömungsrohr (12) strömenden Mediums, bei welchem mittels einer Ultraschalleinrichtung (14, 16) die Schalllaufzeiten ($t_1$, $t_2$) des Ultraschalls entgegen und in Strömungsrichtung des strömenden Mediums gemessen werden und daraus der Massendurchfluss berechnet wird, **dadurch gekennzeichnet, dass**

    a) mittels einer Druckerfassungseinrichtung ein den Druck (p) des strömenden Mediums repräsentierendes Drucksignal ermittelt wird,
    b) mittels eines Temperaturfühlers (44) ein die Temperatur des strömenden Mediums repräsentierender Temperaturwert ($T_{NTC}$) ermittelt wird,
    c) mittels der Ultraschalleinrichtung (14, 16) ein die Temperatur des strömenden Mediums repräsentierendes Ultraschall-Temperatursignal ($T_{UFM}$) ermittelt wird und bei dem der Massendurchfluss ($m_{UFM}$) zusätzlich zu den Schalllaufzeiten ($t_1$, $t_2$) in Abhängigkeit von dem Drucksignal berechnet wird

    und das mittels der Ultraschalleinrichtung (14, 16) ermittelte Ultraschall-Temperatursignal ($T_{UFM}$) und der mittels des Temperaturfühlers ermittelte Temperaturwert ($T_{NTC}$) zur Korrektur des so berechneten Massendurchflusses ($m_{UFM}$) herangezogen wird.

2. Verfahren gemäß Anspruch 1, bei dem der mittels des Temperaturfühlers (44) bestimmte Temperaturwert ($T_{NTC}$) des strömenden Mediums zusätzlich zur Korrektur des Ultraschall-Temperatursignals herangezogen wird.

3. Verfahren gemäß Anspruch 1, bei dem der mittels des Temperaturfühlers (44) bestimmte Temperaturwert ($T_{NTC}$) des strömenden Mediums zur Ermittlung eines die Feuchte des strömenden Mediums repräsentierenden Wertes verwendet wird.

4. Verfahren gemäß Anspruch 1, **dadurch gekennzeichnet, dass** die Schallgeschwindigkeit des strömenden Mediums gemäß der Beziehung

$$c = 2 \bullet L \bullet \frac{1}{\Sigma t} \bullet \frac{1}{s} \, ,$$

mit L = Abstand der Ultraschallwandler (14, 16) voneinander und die mittlere Strömungsgeschwindigkeit gemäß

$$v = \frac{2L}{\cos\alpha} \bullet \frac{\Delta t}{(\Sigma t)^2} \bullet \frac{1}{s} \, ,$$

mit $\alpha$ = Kippwinkel der Ultraschallwandler (14, 16) bestimmt wird.

5. Verfahren gemäß Anspruch 4, **dadurch gekennzeichnet, dass** aus der ermittelten Schallgeschwindigkeit c des strömenden Mediums die Temperatur T des strömenden Mediums gemäß

$$c^2 = \kappa RT$$

bestimmt wird mit $\kappa$ = Adiabatenkoeffizient und R = Gaskonstante.

6. Verfahren gemäß Anspruch 1, **dadurch gekennzeichnet, dass** eine Korrektur hinsichtlich der Luftfeuchte eines Massenstromsignals des strömenden Mediums anhand eines Korrekturfaktors (korr) nach der Beziehung

$$m_{korr} = m_{UFM} \cdot korr = m_{UFM} \cdot \kappa_{feucht} / \kappa_{trocken} = m_{UFM} \cdot T_{UFM} / T_{NTC}$$

erfolgt mit
$\kappa_{feucht}$ = Adiabatenexponent feuchter Luft, $\kappa_{trocken}$ = Adiabatenexponent trockener Luft, $T_{UFM}$ = Ultraschall-Temperatursignal, $T_{NTC}$ = Temperaturwert Temperaturfühler (44).

7. Verfahren gemäß Anspruch 6, **dadurch gekennzeichnet, dass** eine Aktualisierung des Korrekturfaktors

$$korr = T_{UFM} / T_{NTC}$$

entweder durchgeführt wird, sobald das Massenstromsignal eine vorher festgelegte Schwelle unterschreitet oder eine Temperatur von T = 20°C unterschritten wird.

8. Verfahren gemäß einem oder mehrerer der vorhergehenden Ansprüche, **dadurch gekennzeichnet, dass** der Adiabatenexponent $\kappa_{feucht}$ für feuchte Luft gemäß der Beziehung $\kappa = \gamma / M$ mit

$$\gamma = 1 + R(X_1 C_{v1} + X_2 C_{v2} + ...)^{-1}$$

und

$$M = X_1 M_1 + X_2 M_2 + ...,$$

mit

$$\sum_j X_j = 1$$, $C_v$ = die spezifische Wärme bei konstantem Volumen, M = molare Masse, $X_J$ = molare Anteile der einzelnen Mischungskomponenten bestimmt wird.

9. Verfahren gemäß einem oder mehrerer der vorhergehenden Ansprüche, **dadurch gekennzeichnet, dass** das auf den Sauerstoffanteil bezogene Massenstromsignal anhand der Beziehung

$$m_{O_2} \sim m_{korr} \cdot X_{O_2}^{feucht} / X_{O_2}^{trocken}.$$

mit $X_{O_2}^{feucht}$ = Sauerstoffanteil feuchte Luft,

$X_{O_2}^{trocken}$ = Sauerstoffanteil trockene Luft errechnet wird.

10. Ultraschallmesseinrichtung (10) mit zwei Ultraschallwandlern (14, 16) zur Einkopplung von Ultraschallsignalen (20) in ein strömendes Medium sowie eine Auswerteelektronik (18) zur Durchführung des Verfahrens gemäß einem oder mehrerer der Verfahrensansprüche 1 bis 9, **dadurch gekennzeichnet, dass** eine Fühlereinheit (48) in einem Strömungsrohr (12) aufgenommen ist, die einen umströmten Temperaturfühler (44) umfasst, der entkoppelt vom Strömungsrohr (12) gehalten ist.

11. Ultraschallmesseinrichtung gemäß dem vorhergehenden Anspruch, **dadurch gekennzeichnet, dass** die Fühlereinheit (48) eine Halterung (28) aufweist, an welcher eine frei umströmte Reflexionsfläche (30) befestigt ist.

12. Ultraschallmesseinrichtung gemäß dem vorhergehenden Anspruch, **dadurch gekennzeichnet, dass** die Reflexionsfläche (30) eben, gewölbt oder gekrümmt ausgebildet ist und der Temperaturfühler (44) in diese integriert ist.

13. Ultraschallmesseinrichtung gemäß Anspruch 10, **dadurch gekennzeichnet, dass** der Temperaturfühler (44) als NTC-, PTC-, Hitzdraht- oder Heißfilmsensor ausgeführt ist.

**Claims**

1. Method for determining the mass flow of a medium flowing in a flow pipe (12), in which an ultrasonic device (14, 16) is used to measure the sound travel times ($t_1$, $t_2$) of the ultrasound counter to and in the flow direction of the flowing medium, and the mass flow is calculated therefrom, **characterized in that**

   a) a pressure detecting device is used to determine a pressure signal representing the pressure (p) of the flowing medium,
   b) a temperature sensor (44) is used to determine a temperature value ($T_{NTC}$) representing the temperature of the flowing medium,
   c) the ultrasonic device (14, 16) is used to determine an ultrasonic temperature signal ($T_{UFM}$) representing the temperature of the flowing medium,

   and in which the mass flow ($m_{UFM}$) is calculated in addition to the sound travel times ($t_1$, $t_2$) as a function of the pressure signal,
   and the ultrasonic temperature signal ($T_{UFM}$) determined by means of the ultrasonic device (14, 16) and the temperature value ($T_{NTC}$) determined by means of the temperature sensor are used to correct the mass flow ($m_{UFM}$) thus calculated.

2. Method according to Claim 1, in which the temperature value ($T_{NTC}$), determined by means of the temperature sensor (44), of the flowing medium is additionally used to correct the ultrasonic temperature signal.

3. Method according to Claim 1, in which the temperature value ($T_{NTC}$), determined by means of the temperature sensor (44), of the flowing medium is used to determine a value representing the humidity of the flowing medium.

4. Method according to Claim 1, **characterized in that** the speed of sound of the flowing medium is determined in accordance with the relationship

$$c = 2 \bullet L \bullet \frac{1}{\Sigma t} \bullet \frac{1}{s} \;,$$

where L = mutual spacing of the ultrasonic transducers (14, 16), and the mean flow rate is determined in accordance with

$$\dot{v} = \frac{2L}{\cos\alpha} \bullet \frac{\Delta t}{(\Sigma t)^2} \bullet \frac{1}{s} \;,$$

where $\alpha$ = tilt angle of the ultrasonic transducers (14, 16).

5. Method according to Claim 4, **characterized in that** the temperature T of the flowing medium is determined from the determined speed of sound c of the flowing medium in accordance with

$$c^2 = \kappa RT$$

where $\kappa$ = adiabatic coefficient and R = gas constant.

6. Method according to Claim 1, **characterized in that** a correction factor (korr) is used for correction with regard to the air humidity of a mass flow signal of the flowing medium by using the relationship

$$m_{korr} = m_{UFM} \bullet korr = m_{UFM} \bullet \kappa_{feucht} / \kappa_{trocken} = m_{UFM} \bullet T_{UFM} / T_{NTC} \, ,$$

where $\kappa_{feucht}$ = adiabatic exponent of moist air, $\kappa_{trocken}$ = adiabatic exponent of dry air, $T_{UFM}$ = ultrasonic temperature signal, $T_{NTC}$ temperature value of the temperature sensor (44).

7. Method according to Claim 6, **characterized in that** the correction factor

$$korr = T_{UFM} / T_{NTC}$$

is updated either as soon as the mass flow signal undershoots a previously fixed threshold, or a temperature of T = 20°C is undershot.

8. Method according to one or more of the preceding claims, **characterized in that** the adiabatic exponent $\kappa_{feucht}$ for humid air is determined by means of the relationship $\kappa = \gamma/M$, where

$$\gamma = 1 + R(X_1 C_{v1} + X_2 C_{v2} + ...)^{-1}$$

and

$$M = X_1 M_1 + X_2 M_2 + ...,$$

where

$$\sum_j X_j = 1 \, ,$$ $C_v$ = the specific heat at constant volume, M = molar mass, $X_J$ = molar proportions of the individual mixture components.

9. Method according to one or more of the preceding claims, **characterized in that** the mass flow signal referred to the oxygen proportion is calculated with the aid of the relationship

$$m_{O_2} \sim m_{korr} \bullet X_{O_2}^{feucht} / X_{O_2}^{trocken}$$

where $X_{O_2}^{feucht}$ = oxygen proportion moist air, $X_{O_2}^{trocken}$ = oxygen proportion dry air.

**10.** Ultrasonic measuring device (10) having two ultrasonic transducers (14, 16) for coupling ultrasonic signals (20) into a flowing medium, and an electronic evaluation unit (18) for carrying out the method in accordance with one or more of the Method Claims 1 to 9, **characterized in that** there is accommodated in a flow pipe (12) a sensor unit (48) which comprises a temperature sensor (44) in an ambient flow which is kept decoupled from the flow pipe (12).

**11.** Ultrasonic measuring device according to the preceding claim, **characterized in that** the sensor unit (48) has a holder (28) on which there is fastened a reflection surface (30) with free ambient flow.

**12.** Ultrasonic measuring device according to the preceding claim, **characterized in that** the reflection surface (30) is of flat, cambered or curved design, and the temperature sensor (44) is integrated therein.

**13.** Ultrasonic measuring device according to Claim 10, **characterized in that** the temperature sensor (44) is designed as an NTC, PTC, hot wire or hot film sensor.

**Revendications**

**1.** Procédé de détermination du débit massique d'un fluide qui s'écoule dans un tube d'écoulement (12) et dans lequel les temps de parcours acoustiques ($t_1$, $t_2$) des ultrasons sont mesurés en opposition et dans la direction d'écoulement du fluide en écoulement au moyen d'un dispositif (14, 16) à ultrasons, pour en calculer le débit massique, **caractérisé en ce que**

> a) un signal de pression qui représente la pression (p) du fluide en écoulement est déterminé au moyen d'une sonde de pression,
> b) une valeur de température ($T_{NTC}$) qui représente la température du fluide d'écoulement est déterminée au moyen d'une sonde de température (44),
> c) un signal de température d'ultrasons ($T_{UFM}$) qui représente la température du fluide en écoulement est déterminé au moyen du dispositif (14, 16) à ultrasons,

le débit massique ($m_{UFM}$) est calculé en fonction du signal de pression en plus des temps de parcours acoustique ($t_1$, $t_2$) et
la température d'ultrasons ($T_{UFM}$) déterminée au moyen du dispositif (14, 16) à ultrasons et la valeur de température ($T_{NTC}$) déterminée au moyen de la sonde de température interviennent dans la correction du débit massique ($m_{UFM}$) ainsi calculé.

**2.** Procédé selon la revendication 1, dans lequel la valeur de température ($T_{NTC}$) du fluide en écoulement, déterminée au moyen de la sonde de température (44), intervient de plus dans la correction du signal de température d'ultrasons.

**3.** Procédé selon la revendication 1, dans lequel la valeur de température ($T_{NTC}$) du fluide en écoulement, déterminée au moyen de la sonde de température (44), est utilisée pour déterminer une valeur qui représente l'humidité du fluide en écoulement.

**4.** Procédé selon la revendication 1, **caractérisé en ce que** la vitesse des ultrasons du fluide en écoulement est calculée par la relation :

$$c = 2 \bullet L \bullet \frac{1}{\Sigma t} \bullet \frac{1}{s} \; ,$$

dans laquelle L représente la distance entre les convertisseurs d'ultrasons (14, 16), et la vitesse moyenne d'écoulement est déterminée selon :

$$v = \frac{2L}{\cos \alpha} \bullet \frac{\Delta t}{(\Sigma t)^2} \bullet \frac{1}{s} \; ,$$

dans laquelle $\alpha$ = angle d'inclinaison des convertisseurs d'ultrasons (14, 16).

5. Procédé selon la revendication 4, **caractérisé en ce que** la température T du fluide en écoulement est déterminée à partir de la vitesse d'ultrasons c déterminée pour le fluide en écoulement selon la relation :

$$c^2 = \kappa R T$$

dans laquelle $\kappa$ = coefficient adiabatique et R = constante des gaz.

6. Procédé selon la revendication 1, **caractérisé en ce que** la correction de l'humidité de l'air d'un signal d'écoulement massique du fluide en écoulement s'effectue à l'aide d'un facteur de correction (korr) selon la relation :

$$m_{korr} = m_{UFM} \bullet korr = m_{UFM} \bullet \kappa_{feucht} / \kappa_{trocken} = m_{UFM} \bullet T_{UFM} / T_{NTC}$$

dans laquelle
$\kappa_{feucht}$ = exposant adiabatique de l'air humide, $\kappa_{trocken}$ = exposant adiabatique de l'air sec, $T_{UFM}$ = signal de température d'ultrasons et $T_{NTC}$ = valeur de température de la sonde de température (44).

7. Procédé selon la revendication 6, **caractérisé en ce qu'**une actualisation du facteur de correction

$$korr = T_{UFM} / T_{NTC}$$

est exécutée dès que le signal d'écoulement massique n'atteint plus un seuil fixé préalablement ou qu'une température T = 20°C n'est plus atteinte.

8. Procédé selon l'une ou plusieurs des revendications précédentes, **caractérisé en ce que** l'exposant adiabatique $\kappa_{feucht}$ de l'air humide est déterminé selon la relation $\kappa = \gamma/M$, avec

$$\gamma = 1 + R(X_1 C_{v1} + X_2 C_{v2} + ...)^{-1}$$

et

$$M = X_1 M_1 + X_2 M_2 + ...,$$

avec

$\sum_{j} X_j = 1$ , $C_v$ = la chaleur spécifique à volume constant, M = la masse molaire et $X_J$ = fractions molaires des différents composants du mélange.

9. Procédé selon l'une ou plusieurs des revendications précédentes, **caractérisé en ce que** le signal du débit massique rapporté à la teneur en oxygène est calculé à l'aide de la relation :

$$m_{O_2} \sim m_{korr} \bullet X_{O_2}^{feucht} / X_{O_2}^{trocken}$$

dans laquelle $X_{O_2}^{feucht}$ = teneur en oxygène de l'air humide et $X_{O_2}^{trocken}$ = teneur en oxygène de l'air sec.

10. Dispositif (10) de mesure à ultrasons présentant deux convertisseurs (14, 16) d'ultrasons qui injectent des signaux d'ultrasons (20) dans un fluide en écoulement, ainsi qu'une électronique d'évaluation (18) qui exécute le procédé selon l'une ou plusieurs des revendications de procédé 1 à 9,
**caractérisé en ce que**
une unité de sonde (48) est reprise dans un tube d'écoulement (12) et comporte une sonde de température (44) balayée qui est maintenue découplée du tube d'écoulement (12).

11. Dispositif de mesure d'ultrasons selon la revendication précédente, **caractérisé en ce que** l'unité de sonde (48) présente un support (28) sur lequel est fixée une surface réfléchissante (30) balayée librement.

12. Dispositif de mesure d'ultrasons selon la revendication précédente, **caractérisé en ce que** la surface de réflexion (30) est plane, bombée ou courbée et **en ce que** la sonde de température (44) y est intégrée.

13. Dispositif de mesure d'ultrasons selon la revendication 10, **caractérisé en ce que** la sonde de température (44) est configurée comme capteur NTC, capteur PTC, capteur à fil chauffant ou capteur à film chaud.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4442078 A1
- DE 4237907 A1

- EP 1094305 A2